**Europäisches Patentamt**

**European Patent Office**

**Office européen des brevets**

(11) Numéro de publication: **0 003 930**
**B1**

(12) **FASCICULE DE BREVET EUROPEEN**

(21) Numéro de dépôt: **79400089.3**

(51) Int. Cl.³: **G 02 B 5/16**

(22) Date de dépôt: **12.02.79**

(54) Dispositif de pose simultanée de plusieurs fibres optiques dans plusieurs rainures hélicoidales d'un support cylindrique.

(30) Priorité: **01.03.78 FR 7805833**

(43) Date de publication de la demande:
**05.09.79 Bulletin 79/18**

(45) Mention de la délivrance du brevet:
**25.02.81 Bulletin 81/8**

(84) Etats Contractants Désignés:
**BE CH DE GB IT**

(56) Documents cités:
**FR - A - 1 234 874**
**FR - A - 1 528 594**
**FR - A - 2 388 931**

(73) Titulaire: **LIGNES TELEGRAPHIQUES ET TELEPHONIQUES Société anonyme 89 Rue de la Faisanderie F-75782 Paris Cedex 16 (FR)**

(72) Inventeur: **de Vecchis, Michel S.A. LIGNES TELEGRAPHIQUES ET TELEPHONIQUES 89 Rue de la Faisanderie F-75782 Paris Cedex 16 (FR)**

(72) Inventeur: **Hulin, Jean-Pierre S.A. LIGNES TELEGRAPHIQUES ET TELEPHONIQUES 89 Rue de la Faisanderie F-75782 Paris Cedex 16 (FR)**

(74) Mandataire: **Guyot, Liliane S.C.P.I Thomson-CSF 173, Boulevard Haussmann F-75360 Paris Cedex 08 (FR)**

Courier Press, Leamington Spa, England.

Dispositif de pose simultanée de plusieurs fibres optiques dans plusieurs rainures hélicoïdales d'un support cylindrique.

La présente invention concerne la fabrication d'éléments de câblage comportant une âme rigide entourée d'un revêtement diélectrique à rainures hélicoïdales dans lesquelles sont placées librement des fibres optiques et plus particulièrement un dispositif de mise en place des fibres optiques dans les rainures ainsi que des dispositifs perfectionnés de mise en oeuvre.

Le brevet français n° 1 234 874 décrite un dispositif de pose simultanée de plusieurs conducteurs, croisés selon un plan de croisement préétabli, sur un support cylindrique défilant en continu; dans ce dispositif, les conducteurs sont guidés par des tubes creux montés entre deux filières.

Selon la présente invention, la pose simultanée d'une fibre optique dans chacune des rainures d'une structure de forme générale cylindrique, du type décrit notamment dans la demande de brevet français déposée par la Damanderesse le 30 décembre 1975 pour "Elément de câblage pour transmissions urbaines et régionales" (n° de publication 2 358 666) et la demande de brevet français déposée par la Demanderesse le 18 février 1977 pour "Elément de câble incorporant des fibres optiques" (n° de publication 2 381 326) est assurée par l'intermédiaire de guides-fibres élastiques capillaires appuyant par une extrémité effilée au fond de chaque rainure et maintenus solidaires d'une monture légère, mobile avec peu de frottement en rotation par rapport à la structure rainurée. Dans certaines lignes de fabrication, la pose se fait à partir d'outils fixes sur une âme tournante.

Dans d'autres, la structure rainurée défile en translation et le poste de pose est tournant. L'invention prévoit des moyens accessoires assurant l'asservissement angulaire de la monture à l'organe tournant du poste de pose. L'utilisation de guides élastiques pénétrant dans les rainures permet un guidage efficace de la fibre sans tension. L'absence de frottement entre la monture des guides et un support fixe permet à l'ensemble guides-fibres et monture de suivre les éventuelles rotations du support et les irrégularités des rainures sans qu'aucun effort ne s'exerce sur les fibres, ce qui permet d'effectuer la pose dans des conditions industrielles.

L'élasticité des guides permet d'utiliser un même outil pour différentes structures de dimensions voisines et permet de réduire la précision en dimension imposée lors de la fabrication de la structure rainurée à une valeur compatible avec une production industrielle.

Selon une première variante de réalisation de la monture, les guides fibres sont solidaires d'une portion de sphère, présentant une ouverture diamétrale cylindrique, traversée par la structure rainurée, ladite sphère étant monté sans frottement sur un support annulaire, lesdits guides étant répartis uniformément sur un cône coaxial à ladite ouverture de demi-d'angle au sommet inférieur à 45 degrés. Le support annulaire est constitué d'une bague cylindrique parallèle au plan diamétral de la sphère perpendiculaire à l'axe de l'ouverture et maintenue solidaire d'un bâti. Celui-ci est soit fixe, soit tournant suivant le mouvement de défilement de la structure rainurée.

Selon une deuxième variante, les guides-fibres sont solidaires d'un cylindre creux, répartis suivant un cône coaxial au cylindre, ledit cylindre étant supporté par une pièce solidaire d'un bâti par l'intermédiaire d'un roulement à double rangée de billes.

Selon une troisième variante, chaque guide-fibre est solidaire d'une monture parallélépipédique, l'ensemble desdites montures étant distribué suivant les rayons d'un même cylindre coaxial avec un guide annulaire traversé par la structure rainurée. Des moyens individuels de positionnement permettent de régler la position de chacune des montures solidaires chacune d'un axe fixe autour duquel elles peuvent pivoter.

L'invention prévoit un asservissement optoélectronique en position angulaire de la monture supportant les guides-fibres.

L'invention sera bien comprise en se reportant à la description suivante et aux figures qui l'accompagnent données à titre d'exemple non limitatif et dans lesquelles:

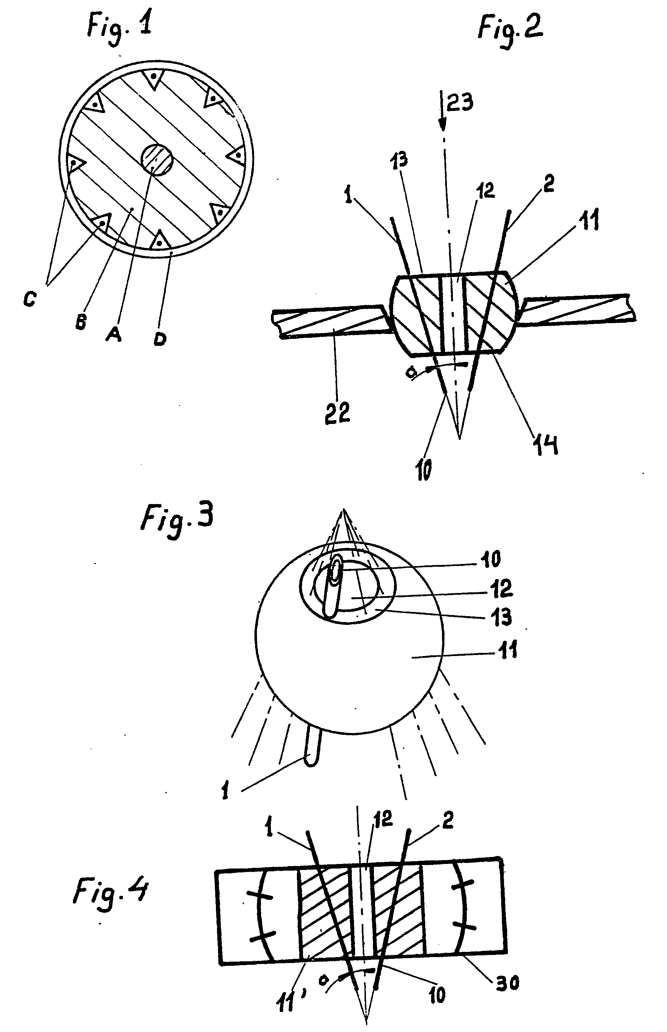

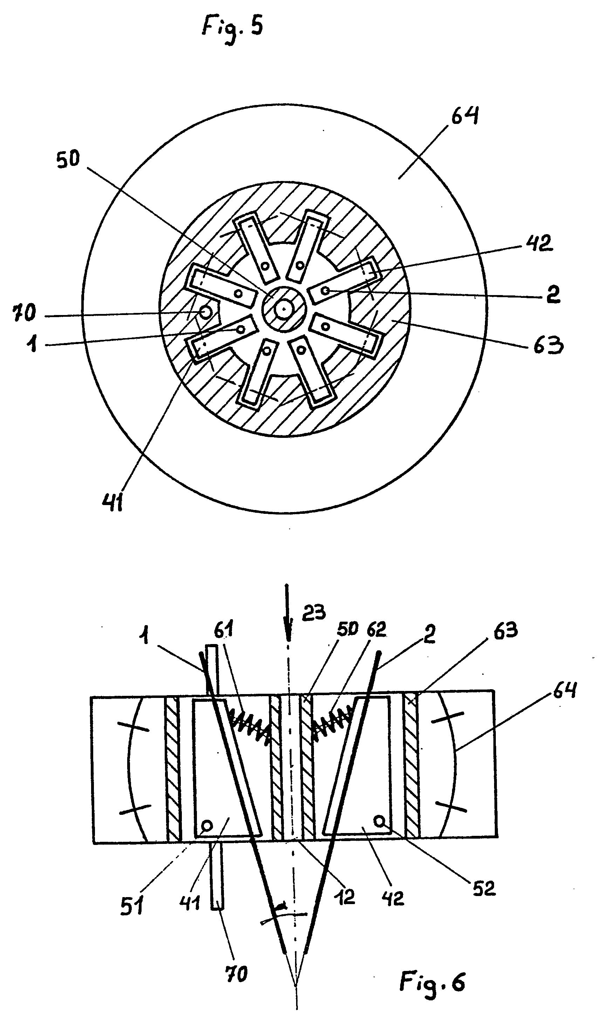

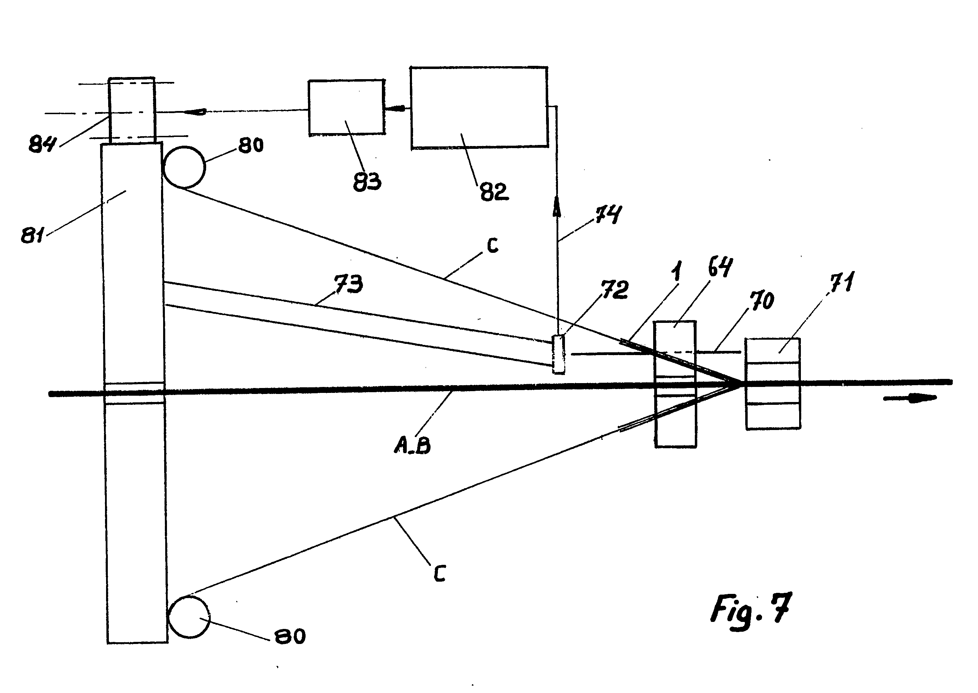

La figure 1 est une vue en coupe d'un élément de câblage terminé; la figure 2 est un schéma de coupe axiale d'une première variante de monture des guides-fibres; la figure 3 est une vue cavalière de ladite variante; la figure 4 est un schéma de coupe axiale d'une deuxième variante; les figures 5 et 6 sont respectivement une vue en élévation et en coupe d'une troisième variante de l'invention; la figure 7 est un schéma du poste de pose des fibres.

La présente invention concerne plus particulièrement la pose des fibres optiques dans un élément de câblage, pouvant éventuellement servir de câble indépendant après pose des enveloppes de protection nécessaires, connu en soi et constitué ainsi qu'il est représenté schématiquement sur la coupe de la figure 1 par une âme A mécaniquement rigide enrobée d'une structure di-électrique B étoilée, les espaces entre les branches de l'étoile constituant des rainures hélicoïdales le long du support A—B. Les fibres optiques C sont disposées librement dans les rainures de B et un rubanage D délimite, vers l'extérieur, les rainures de B. De tels éléments peuvent être assemblés en vue de la constitution d'une câble complexe comportant, éventuellement, également des conducteurs métalliques. La protection de ces éléments est réalisée par tout ensemble de gaines et d'enveloppes connu en soi.

L'invention concerne des moyens pour poser les fibres C dans les rainures de B en continu sans risque de rupture des fibres ni d'établissement de contraintes qui créeraient des pertes de transmission de l'énergie optique le long des fibres.

La figure 2 représente une vue en coupe et la figure 3 une représentation en perspective d'une première variante de monture pour guides-fibres 1, 2, etc. Ceux-ci sont constitués par des conducteurs métalliques cylindriques creux, par exemple du type utilisé à la réalisation d'aiguilles pour piqûres intramusculaires, présentant à l'une de leurs extrémités un biseau 10. Ces guides-fibres sont maintenus dans une monture 11 constituée par une pièce métallique en forme de sphère dont deux calottes parallèles ont été supprimées de façon à former deux faces planes parallèles 13 et 14, dans laquelle est usinée une ouverture centrale cylindrique 12 perpendiculaire aux faces 13 et 14. Les guides-fibres 1, 2, etc... sont introduits par des ouvertures prévues à cet effet dans la monture 11, suivant les directrices d'un cône ayant pour axe celui de l'ouverture 12. Lorsque la nature des fibres optiques le rend nécessaire, les canaux centraux des guides-fibres sont revêtus d'un film facilitant le défilement des fibres, par exemple du téflon lorsque les guides-fibres sont en acier. La figure 3 ne comporte qu'un guide-fibre 10, sept autres guides étant représentés schématiquement par des traits d'axe en pointillé. Il est bien entendu que le nombre de guides-fibres dépend uniquement du type de câble à fabriquer. Dans le cas de l'exemple de la figure 1 l'élément de câble comporte huit fibres. Les guides sont fixés dans la monture 11 par collage dans le plan de la face 13. Il est bien entendu que ces caractéristiques ne sont pas limitatives et correspondent à un exemple particulier. La monture 11 est supportée par une bague 22 qui ne figure pas sur la figure 3. Cette bague présente une face interne cônique de façon que le contact entre 11 et 22 puisse se faire selon un cercle concentrique avec le minimum de frottement pour permettre à la monture 11 de tourner librement dans cette bague. Pratiquement, le pièce 11 est en téflon et la bague 22 en acier trempé rectifié ou inversement, la monture 11 est en acier trempé poli et la bague 22 en téflon. On sait que le coefficient de frottement de telles surfaces est de 0,09. Le diamètre des guides-fibres, en acier inoxydable, est choisi de façon à permettre leur pénétration dans les rainures de la structure supportant les fibres et le diamètre de leur canal central est choisi de façon que la fibre à poser puisse y être enfilée. Ce choix, ainsi que celui de l'inclinaison des guides sur l'axe de la structure permet d'obtenir une pression des guides suffisante pour que le contact entre l'extrémité du guide et le fond de la rainure soit assuré même en cas de variations du diamètre du support ou d'irrégularité de la rainure. Dans une réalisation particulière le diamètre extérieur des guides-fibres est de 0,6 mm, la distance entre l'extrémité du contact avec le fond de la rainure et le point de fixation dans la monture est de 7 mm et l'inclinaison a des guides sur l'axe de la monture est d'environ 30 dégrés.

La variante de la figure 4 diffère essentiellement de celle qui vient d'être décrite par le fait que la liberté de rotation de la monture 11 des guides-fibres 1, 2, etc. est assurée non plus par le contact avec peu de frottement entre surfaces sphérique et cônique mais par un roulement à double rangée de billes représenté schématiquement en 30. Dans cette réalisation, les guides-fibres 1, 2, etc. sont montés dans l'épaisseur de la paroi d'une monture cylindrique 11' présentant une ouverture centrale 12 destinée au passage du support des fibres optiques. La liberté de mouvement de la monture, et par conséquent des guides-fibres, par rapport à un repère fixe est nécessaire pour suivre d'éventuelles fluctuations de la position du support des fibres optiques et notamment des rotations de ce support.

La variante représentée sur les figures 5 et 6 utilise une monture constituée de supports élémentaires indépendants pour chacun des guides-fibres. Ainsi qu'il apparaît, chacun des guides-fibres tels 1, 2, est solidaire d'un support trapézoïdal 41, 42, etc. Ces supports sont distribués régulièrement autour d'un cylindre creux 50 servant de guide au support de fibres optiques (A—B de la figure 1). Ces supports sont fixés par un axe 51, 52, etc. à un bâti fixe, ce qui permet de définir indépendamment l'inclinaison a de chacun des guides-fibres sur l'axe de l'ouverture centrale 12 du guide 50. Un ressort de rappel 61, 62, etc. crée le couple antagoniste nécessaire au retour du support associé en position lorsque celui-ci est amené à pivoter autour de son axe fixe 51, 52, etc. sous l'action par exemple d'une poussée exercée sur l'extrémité du guide-fibre. Les supports individuels 41, 42, etc. sont mis en place dans une couronne 63 portant sur sa face interne les logements destinés à abriter lesdits supports individuels. La couronne 63 est solidaire d'un roulement à aiguilles 64 qui assure la liberté de mouvement de l'ensemble des supports.

La figure 7 est un schéma du poste de pose des fibres dans une ligne de fabrication d'élément de câblage de la figure 1 mettant en évidence le fonctionnement d'un dispositif d'asservissement de la position angulaire de la monture. Un élément de ce dispositif a été représenté en 70 sur les figures 5 et 6 uniquement mais il est bien entendu que ce dispositif peut être associé à l'une quelconque des variantes de monture. On a représenté en 64 la monture des guides-fibres, tel 1, posant les fibres optiques C dans les rainures du support A—B défilant en translation ainsi qu'il est représenté par la flèche. Les fibres C sont fournies par des bobines, telles 80, montées sur un plateau tournant 81 à raison d'un tour par pas des rainures. Un dispositif d'asservissement permet de fixer la position angulaire de la monture 64 par rapport au plateau 81. Il comporte essentiellement une source lumineuse 71 alimentant un guide de lumière à fibre 70 solidaire de la monture des guides-fibres ainsi qu'il est représenté sur la figure 5. Le pinceau lumineux transmis par 70 à travers la monture tombe sur un capteur 72 rendu solidaire de plateau 81 le bras 73. Ce capteur porte un ensemble de trois photodétecteurs, du type phototransistor, disposés de façon qu'un organe photosensible, dit central, se trouve dans l'axe du faisceau lorsque le calage angulaire est assuré et que les deux autres soient disposés symétriquement. Le signal de sortie du capteur 72 alimente, par le conducteur 74, une unité de traitement 82 qui commande le calage angulaire du plateau par l'intermédiaire de l'organe moteur 83. Le couplage entre 83 et le plateau 81 est schématisé par l'engrenage 84.

**Revendications**

1. Dispositif de pose simultanée de plusieurs fibres optiques dans plusiers rainures hélicoïdales d'un support cylindrique, comportant un bâti fixe et une monture (11), présentant une ouverture centrale (12) permettant le défilement du support (A—B) et portant un ensemble de guides-fibres (1, 2) constitués chacun par un tube; le dispositif étant caractérisé par le fait que la monture (11) peut tourner librement par rapport au bâti, et que chacun des tubes constituant les guides-fibres (1, 2) est élastiquement terminé à l'une de ses extrémités par un biseau (10) reposant sous pression au fond d'une des rainures.

2. Dispositif selon la revendication 1, caractérisé par le fait que fait que la monture (11) a une forme de sphère tronquée par élimination de deux calottes, parallèles à un même diamètre perpendiculaire à l'axe (23) de ladite ouverture centrale (12), que les guides-fibres (1, 2) sont disposés selon les génératrices d'un cône de même axe et d'angle au sommet (a) sensiblement égal à 30 degrés, et que le bâti fixe comporte une bague (22) située dans un plan perpendiculaire audit axe (23) et présentant une ouverture de profil cônique dans laquelle repose la monture (11).

3. Dispositif selon la revendication 1, caractérisé par le fait que la monture (11) a la forme d'un cylindre creux monté sur un bâti par l'intermédiaire d'un roulement (30) à double rangée de billes et que les guides-fibres (1, 2) sont répartis selon les génératrices d'un cône ayant le même axe que le cylindre.

4. Dispositif selon la revendication 1, caractérisé par le fait que la monture comporte un ensemble de supports trapézoïdaux (41, 42) répartis radialement autour d'un cylindre creux (50) servant au défilement du support cylindrique rainuré (A—B), lesdits supports trapézoïdaux (41, 42) étant mobiles autour d'un axe (51, 52) perpendiculaire à l'axe (23) dudit cylindre creux (50) et supportant chacun un guide-fibre (1, 2) incliné par rapport à l'axe (23) dudit cylindre (50), ces supports étant fixés dans une couronne (63) montée sur le bâti fixe par l'intermédiaire d'un roulement à aiguilles (64).

5. Dispositif selon la revendication 1, caractérisé par le fait que la monture est traversée par un guide de lumière (70) disposé parallèlement à la direction de défilement du support rainuré (A—B) associé à une source de lumière (71) et qu'un circuit d'asservissement à capteur optique (72) commande le calage angulaire de ladite monture par rapport à un plateau (81) supportant les bobines de réserve (80) des fibres optiques (C).

**Claims**

1. Means for the simultaneous arrangement of a plurality of optical fibres in a plurality of helically extending grooves of a cylindrical support, comprising a fixed frame and an assembly member (11) which comprises a centre opening (12) for passage of the support (A—B) and carries a group of fibre guides (1, 2) each formed by a tube, characterized in that the assembly member (11) can rotate freely with respect to the frame and that each of the tubes forming the fibre guides (1, 2) terminates at one end elastically by means of an inclined face (10) which bears under pressure on the bottom of one of the grooves.

2. Means according to claim 1, characterized in that the assembly member (11) has the form of a sphere out of which are cut two sections parallel to an equal diameter perpendicular to the axis (23) of the centre opening (12), that the fibre guides (1, 2) are disposed along generatrices of a cone with the same axis and with an apex angle (a) of substantially 30° and that the fixed frame comprises a ring (22) which lies in a plane extending perpendicular to the axis (23) and has an opening with conical profile in which the assembly member (11) rests.

3. Means according to claim 1, characterized in that the assembly member (11) has the form of a hollow cylinder which is mounted on the frame by means of a rolling bearing (30) with a double ball row, and that the fibre guides (1, 2) are disposed along generatrices of a cone coaxial with the cylinder.

4. Means according to claim 1, characterized in that the assembly member includes a group of trapezoidal supports (41, 42) which are distributed radially about the hollow cylinder (50) serving for the passage of the cylindrical support (A—B) provided with grooves, that the trapezoidal supports (41, 42) are moveable about an axis (51, 52) perpendicular to the axis (23) of the hollow cylinder (50) and each carry a fibre guide (1, 2) which is inclined to the axis (23) of the hollow cylinder (50), and that the trapezoidal supports are mounted in a circular ring (63) which is arranged on the fixed frame by means of a needle bearing (64).

5. Means according to claim 1, characterized in that the assembly member is traversed by a waveguide (70) which is disposed parallel to the direction of the passage of the support (A—B) and associated with a light source (71), and that a control circuit with optical pickup (72) controls the angular position of the assembly member with respect to a plate (81) which carries the supply reels (80) of the optical fibres (C).

## Patentansprüche

1. Vorrichtung zum gleichzeitigen Anordnen mehrerer optischer Fasern in mehreren schraubenlinienförmig verlaufenden Nuten eines zylindrischen Trägers, mit einem festen Rahmen und einem Montageteil (11), das eine Mittelöffnung (12) zum Hindurchzeihen des Trägers (A—B) aufweist und eine Gruppe von Faserführungen (1, 2) trägt, die jeweils von einem Rohr gebildet sind, dadurch gekennzeichnet, daß sich das Montageteil (11) frei bezüglich des Rahmens drehen kann und daß jedes der die Faserführungen (1, 2) bildenden Rohre an einem Ende elastisch mittels einer Schrägfläche (10) endet, die sich unter Druck am Boden einer der Nuten abstützt.

2. Vorrichtung nach Anspruch 1, dadurch gekennzeichnet, daß das Montageteil (11) die Form einer Kugel hat, von der zwei Kalotten parallel zu einem gleichen Durchmesser, senkrecht zur Achse (23) der Mittelöffnung (12) abgeschnitten sind, daß die Faserführungen (1, 2) längs Mantellinien eines Konus mit gleicher Achse und mit einem Scheitelwinkel (a) von im wesentlichen 30° angeordnet sind und daß der feste Rahmen einen Ring (22) aufweist, der in einer senkrecht zu der Achse (23) verlaufenden Ebene liegt und eine Öffnung mit konischem Profil aufweist, in der das Montageteil (11) sitzt.

3. Vorrichtung nach Anspruch 1, dadurch gekennzeichnet, daß das Montageteil (11) die Form eines Hohlzylinders hat, der an dem Rahmen mittels eines Wälzlagers (30) mit einer doppelten Kugelreihe angebracht ist, und daß die Faserführungen (1, 2) längs Mantellinien eines mit dem Zylinder gleichachsigen Konus angeordnet sind.

4. Vorrichtung nach Anspruch 1, dadurch gekennzeichnet, daß das Montageteil eine Gruppe trapezförmiger Träger (41, 42) enthält, die radial um den Hohlzylinder (50) verteilt sind, der dem Hindurchführen des zylindrischen, mit Nuten versehenen Trägers (A—B) dient, daß die trapezförmigen Träger (41, 42) um eine zur Achse (23) des Hohlzylinders (50) senkrechte Achse (51, 52) beweglich sind und jeweils eine Faserführung (1, 2) tragen, die gegen die Achse (23) des Hohlzylinders (50) geneigt ist, und daß die trapezförmigen Träger in einem Kreisring (63) befestigt sind, der am festen Rahmen mittels eines Nadellagers (64) angebracht ist.

5. Vorrichtung nach Anspruch 1, dadurch gekennzeichnet, daß das Montageteil von einem Lichtleiter (70) durchdrungen ist, der parallel zur Richtung der Hindurchführung des Trägers (A—B) angeordnet und einer Lichtquelle (71) zugeordnet ist, und daß eine Regelschaltung mit optischem Aufnehmer (72) die Winkelstellung des Montageteils bezüglich einer Platte (81) steuert, die die Vorratsspulen (80) der optischen Fasern (C) trägt.

Fig. 1

Fig. 2

Fig. 3

Fig. 4

Fig. 5

Fig. 6

Fig. 7

84

80

81

83

82

74

C

73

72

1

64

70

71

A.B

C

0 003 930